# EUROPÄISCHE PATENTSCHRIFT

(11) **EP 0 644 373 B1**
(45) Veröffentlichungstag und Bekanntmachung des Hinweises auf die Patenterteilung: **18.11.1998**
(21) Anmeldenummer: 94113820.8
(22) Anmeldetag: 02.09.1994
(51) Int. Cl.: F21K 7/00, F21V 8/00, G02B 6/42

(54) **Elektrisches Gerät**
Electrical apparatus
Appareil électrique

(30) Priorität: 17.09.1993 DE 4331682
(43) Veröffentlichungstag der Anmeldung: 22.03.1995
(73) Patentinhaber: SIEMENS AKTIENGESELLSCHAFT, 80333 München (DE)
(72) Erfinder: Deinhardt, Günther, Dipl.-Ing. (FH), D-92224 Amberg (DE); Meiler, Werner, D-92263 Ebermannsdorf (DE)

(56) Entgegenhaltungen:
- DE-C- 3 703 423
- DE-U- 8 513 910
- DE-U- 9 212 999

## Beschreibung

Die vorliegende Erfindung betrifft ein elektrisches Gerät, bestehend aus einem Gehäuse und mindestens einer im Gehäuse angeordneten Leiterplatte, auf der vom Gehäuse zurückgesetzte Leuchtdioden, insbesondere SMD-Leuchtdioden, angeordnet sind, wobei das von den Leuchtdioden emittierte Licht über Lichtleiter durch im Gehäuse angeordnete Ausnehmungen nach außen zu einer Anzeigeseite des elektrischen Geräts führbar ist.

Aus dem DE-GM 92 12 999 ist ein derartiges elektrisches Gerät mit Lichtleitstiften bekannt, die mit Hilfe von Distanzstegen mechanisch zu einer reihenförmigen Lichtleitstiftgruppe verbindbar sind. An ihrem unteren Ende weisen sie Formschlußelemente auf, mit denen sie formschlüssig über auf einer Leiterplatte angeordneten Leuchtdioden aufsteckbar sind. Die Lichtleitstiftgruppe wird von der Gehäuseinnenseite durch reihenförmige Durchbrüche eines Gehäuses, die denselben Abstand wie die Lichtleitstifte untereinander aufweisen, hindurchgesteckt. Im montierten Zustand ist die Lichtleitstiftgruppe einerseits durch die gegen die Durchbruchunterkante drückenden Distanzstege gegenüber dem Gehäuse bzw. durch die Formschlußelemente gegenüber der Leiterplatte fixiert.

Die DE-OS 37 03 423 zeigt Lichtleiter, die durch einen gemeinsamen Quersteg zueinander ausgerichtet zusammengehalten werden. Diese Lichtleiter sind in einem Frontstreckteil gehaltert, welches auf der Leiterplatte aufgebracht ist, die auch die Leuchtdioden trägt.

Aus der DE-OS 41 02 448 ist ein elektronisches Gerät mit Leuchtdioden auf einer im Gerät angeordneten Leiterplatte bekannt, wobei das Licht der Lichtdioden mit Hilfe von Lichtleitern zu einer Anzeigeseite geleitet wird, wobei die Lichtleiter Ausstülpungen sowie Ausnehmungen aufweisen, die der Justierung bei der Montage und dem Schutz der Leuchtdioden nach der Montage dienen.

Die Aufgabe der vorliegenden Erfindung besteht darin, eine möglichst einfache und sichere Montage der Lichtleiter und auch des elektrischen Geräts zu schaffen, die vollautomatisierbar und damit kostengünstig ist.

Die Aufgabe wird dadurch gelöst, daß das Gehäuse aus einem Gehäusegrundkörper und einer Gehäusehaube zusammengesetzt ist und daß die Lichtleiter von einer Anzeigeseite der Gehäusehaube aus in die Ausnehmungen einführbar sind, wobei die Lichtleiter und die Gehäusehaube zusammenwirkende Rastelemente aufweisen, so daß die Lichtleiter beim Einführen in die Gehäusehaube mit dieser verrasten und wobei weiterhin die Leiterplatte im Gehäuse, insbesondere in der Gehäusehaube durch Führungsschienen gehalten ist, so daß die Leiterplatte hin zur Anzeigeseite (8) der Gehäusehaube (1") in die Gehäusehaube einführbar ist, so daß Leiterplatte und Lichtleiter unabhängig voneinander montierbar sind.

Eine besonders platzsparende Montage ergibt sich, wenn die Lichtleiter von der Anzeigeseite aus in die Ausnehmungen einführbar sind.

Zur leichteren Einführbarkeit sind die Lichtleiter vorzugsweise an ihrer Einführseite angeschrägt.

Wenn die Leuchtdioden ihr Licht nicht zur Anzeigeseite hin abstrahlen, wird das Licht mittels einer in den Lichtleiter integrierten Richtfläche, z. B. einer Spiegelfläche, zur Anzeigeseite umgelenkt. Zum Schutz vor Verstauben oder Verkratzen ist die Richtfläche in diesem Fall vorzugsweise von einer Schutzummantelung umgeben.

Die Montage ist noch rationeller durchführbar, wenn mehrere Lichtleiter zu einer einstückigen Lichtleitereinheit zusammengefaßt sind. In diesem Fall sind die lichtleiterseitigen Rastelemente vorzugsweise an den Enden der Lichtleitereinheit angeordnet.

Weitere Vorteile und Einzelheiten ergeben sich aus der nachfolgenden Beschreibung eines Ausführungsbeispiels und in Verbindung mit den Zeichnungen. Dabei zeigen:
- FIG 1: eine Baugruppe einer speicherprogrammierbaren Steuerung von oben;
- FIG 2: eine Ausschnittsvergrößerung von FIG 1 und
- FIG 3: einen Ausschnitt der Baugruppe von der Seite.
- FIG 4: eine Lichtleitereinheit von oben.

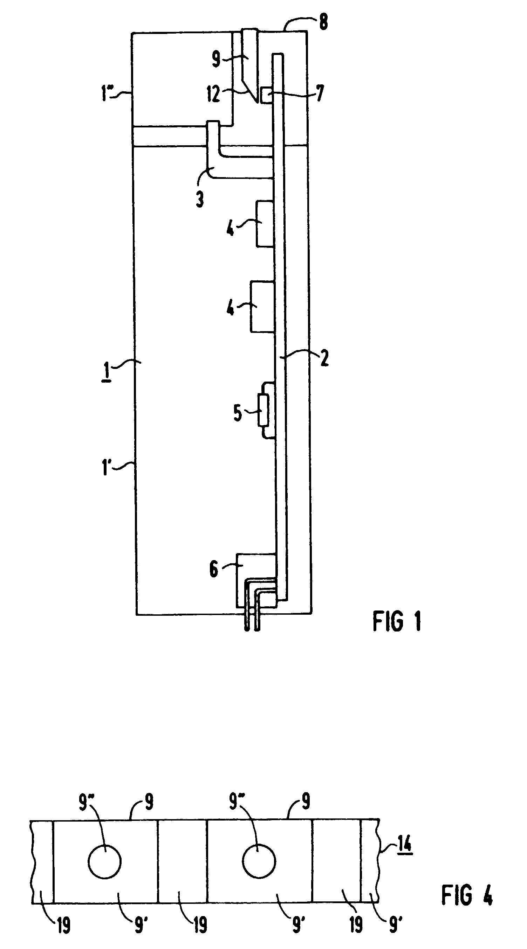

Gemäß FIG 1 besteht die Baugruppe aus einem Gehäuse 1, bestehend aus Gehäusegrundkörper 1' und Gehäusehaube 1", die miteinander verrastet sind. Im Gehause 1 ist eine Leiterplatte 2 angeordnet. Im vorliegenden Fall ist die Baugruppe eine Digital-Eingabe-Baugruppe. Sie weist folglich Peripherieanschlüsse 3 auf, mittels derer der Baugruppe von einem technischen Prozeß gelieferte Eingangssignale zuführbar sind. Die Eingangssignale werden auf der Leiterplatte 2 über nicht dargestellte Leiterbahnen einer elektronischen Schaltung zugeführt, die aus den SMD-Bauelementen 4 und bedrahteten Bauelementen 5 besteht. In der Schaltung werden die Eingangssignale vorverarbeitet und auf der Leiterplatte 2 über ebenfalls nicht dargestellte Leiterbahnen an den Buskontaktstecker 6 weitergegeben. Von dort werden sie über ein ebenfalls nicht dargestelltes Bussystem an eine Zentraleinheit der speicherprogrammierbaren Steuerung weitergeleitet, die die Eingangssignale verarbeiten kann.

Zur Anzeige des Zustands der Eingangssignale sind auf der Leiterplatte 2 SMD-Leuchtdioden 7 angeordnet, die von der Anzeigeseite 8 zurückgesetzt sind. Das von den Leuchtdioden 7 emittierte Licht wird daher über Lichtleiter 9 durch im Gehäuse angeordnete Ausnehmungen 10 nach außen zur Anzeigeseite 8 geführt.

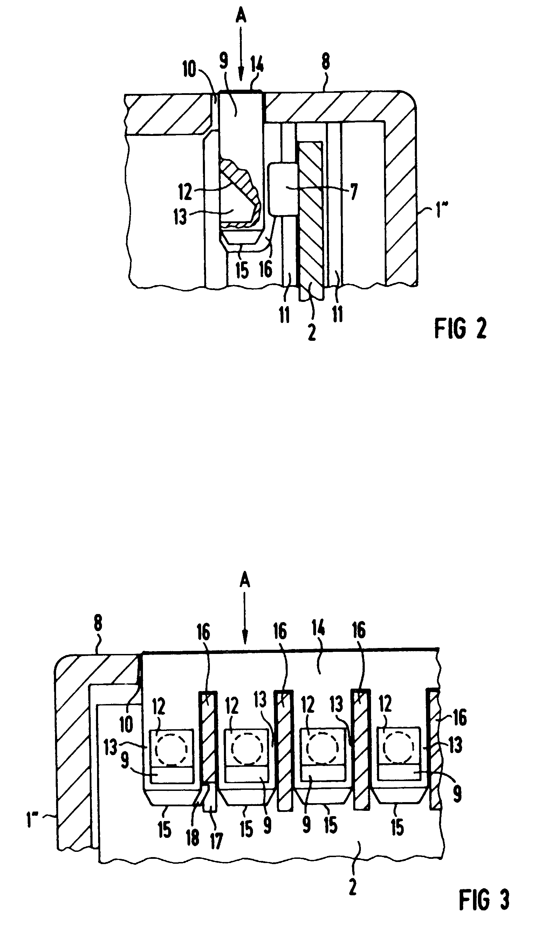

Wie aus FIG 2 ersichtlich ist, wird die Leiterplatte 2 im Gehäuse 1 durch Führungsschienen 11 gehalten und so justiert. Wie ferner auf FIG 2 ersichtlich ist, strahlen die Leuchtdioden 7 ihr Licht nicht direkt zur Anzeigeseite 8 hin, sondern senkrecht dazu ab. Das Licht wird daher mittels der Spiegelfläche 12, die integraler Bestandteil des Lichtleiters 9 ist, zur Anzeigeseite 8 umgelenkt. Zum Schutz vor Verstauben, Zerkratzen, etc. ist die Spiegelfläche 12 dabei von einer Schutzummantelung 13 umgeben. Auch die Schutzummantelung ist integraler Bestandteil des Lichtleiters 9.

Wie insbesondere aus FIG 3 ersichtlich ist, sind mehrere Lichtleiter 9 zu einer einstückigen Lichtleitereinheit 14 mit z. B. 10 einzelnen Lichtleitern 9 zusammengefaßt. Analog hierzu weist das Gehäuse 1 selbstverständlich anstelle einzelner Ausnehmungen eine gemeinsame Ausnehmung 10 auf. Bei der Montage der Lichtleitereinheit 14 wird diese von der Anzeigeseite 8 aus in Richtung des Pfeils A mittels einer - zumindest im wesentlichen - linearen Bewegung in die Ausnehmung 10 eingeführt. Um die Einführbarkeit zu erleichtern, sind die Lichtleiter 9 dabei an ihrer Einführseite 15 angeschrägt. Wie ferner aus FIG 3 ersichtlich ist, weist das Gehäuse 1 Führungsstege 16 auf, die das Einführen der Lichtleitereinheit 14 erleichtern.

Gemäß FIG 3 ist der Führungssteg 16 links außen gegenüber den anderen Führungsstegen 16 verkürzt, so daß die so entstehende Rastausnehmung 17 mit dem am äußeren Lichtleiter 9 angeordneten Rasthaken 18 beim Einführen der Lichtleitereinheit 14 in das Gehäuse 1 mit dem Gehäuse 1 verrasten kann. Ebenso ist am anderen Ende der Lichtleitereinheit 14 ein spiegelbildlich angeordneter, der Übersichtlichkeit halber nicht dargestellter Rasthaken angeordnet, der ebenfalls mit einem verkürzten Führungssteg zusammenwirkt.

Wie insbesondere aus FIG 2 ersichtlich ist, sind die Lichtleitereinheit 14 und die Leiterplatte 2 mit ihren Leuchtdioden 7 räumlich getrennt voneinander angeordnet. Es ist daher möglich, die Lichtleitereinheit 14 unabhängig von der Leiterplatte 2 zu montieren. Die Montage der Lichtleitereinheit 14 ist also sowohl vor als auch nach der Montage der bestückten Leiterplatte durchführbar.

Gemäß FIG 4 besteht die Lichtleitereinheit 14 aus mehreren Lichtleitern 9, die über Zwischenstücke 19 miteinander verbunden sind. Die einzelnen Lichtleiter 9 weisen polierte Mittelflächen 9" auf, die von aufgerauhten oder mattierten Randflächen 9' umgeben sind. Die Mittelflächen 9" wirken daher lichtbrechend, die Randflächen 9' lichtstreuend. Die polierten Mittelflächen 9" der Lichtleiter 9 sind in der Mitte der Lichtaustrittsflächen angeordnet. Sie liegen daher bei montiertem Lichtleiter direkt in den optischen Achsen der Leuchtdioden 7. Dadurch ist es möglich, bei Betrachtung aus der Richtung A "direkt in die Leuchtdioden 7 hineinzusehen".

## Patentansprüche

1. Elektrisches Gerät, bestehend aus
- einem Gehäuse (1),
- das aus einem Gehäusegrundkörper (1') und einer Gehäusehaube (1") zusammengesetzt ist,
- und mindestens einer im Gehäuse (1) angeordneten Leiterplatte (2),
- die im Gehäuse (1), insbesondere in der Gehäusehaube (1"), durch Führungsschienen (11) gehalten ist,
- auf der vom Gehäuse (1) zurückgesetzte Leuchtdioden (7), insbesondere SMD-Leuchtdioden (7), angeordnet sind,
- wobei das von den Leuchtdioden (7) emittierte Licht über Lichtleiter (9) durch in der Gehäusehaube (1") angeordnete Ausnehmungen (10) nach außen zu einer Anzeigeseite (8) des elektrischen Geräts führbar ist, **dadurch gekennzeichnet**,
- daß die Lichtleiter (9) von einer Anzeigeseite (8) der Gehäusehaube (1") aus in die Ausnehmungen (10) einführbar sind,
- daß die Lichtleiter (9) und die Gehäusehaube (1") zusammenwirkende Rastelemente (17,18) aufweisen, so daß die Lichtleiter (9) beim Einführen in die Gehäusehaube (1") mit der Gehäusehaube (1") verrasten und
- daß die Leiterplatte (2) hin zur Anzeigeseite (8) der Gehäusehaube (1") in die Gehäusehaube (1") einführbar ist,
- so daß Leiterplatte (2) und Lichtleiter (9) unabhängig voneinander montierbar sind.

2. Elektrisches Gerät nach Anspruch 1,
**dadurch gekennzeichnet**, daß die Lichtleiter (9) mittels einer im wesentlichen linearen Bewegung in die Ausnehmungen (10) einführbar sind.

3. Elektrisches Gerät nach Anspruch 1 oder 2,
**dadurch gekennzeichnet**, daß die Lichtleiter (9) an ihrer Einführseite (15) angeschrägt sind.

4. Elektrisches Gerät nach einem der obigen Ansprüche,
**dadurch gekennzeichnet**, daß die Leuchtdioden (7) ihr Licht nicht direkt zur Anzeigeseite (8) hin abstrahlen und daß das Licht mittels einer in den Lichtleiter (9) integrierten Richtfläche (12), z. B. einer Spiegelfläche (12), zur Anzeigeseite (8) umgelenkt wird.

5. Elektrisches Gerät nach Anspruch 4,
**dadurch gekennzeichnet**, daß die Richtfläche (12) von einer Schutzummantelung (13) umgeben ist.

6. Elektrisches Gerät nach einem der obigen Ansprüche,
**dadurch gekennzeichnet**, daß mehrere Lichtleiter (9) zu einer einstückigen Lichtleitereinheit (14) zusammengefaßt sind.

7. Elektrisches Gerät nach Anspruch 6,
**dadurch gekennzeichnet**, daß die lichtleiterseitigen Rastelemente (18) an den Enden der Lichtleitereinheit (14) angeordnet sind.

## Claims

1. Electrical apparatus consisting of
- a housing (1),
- which is composed of a basic housing body (1') and a housing hood (1"),
- and at least one printed-circuit board (2) which is arranged in the housing (1),
- and is held in the housing (1), in particular in the housing hood (1"), by means of guide rails (11),
- and arranged on which there are light-emitting diodes (7), in particular SMD light-emitting diodes (7), which are set back from the housing (1),
- wherein the light emitted by the light-emitting diodes (7) can be guided outwards to a display side (8) of the electrical apparatus by way of light guides (9) through recesses (10), which are arranged in the housing hood (1"), characterised
- in that the light guides (9) can be inserted into the recesses (10) from a display side (8) of the housing hood (1"),
- in that the light guides (9) and the housing hood (1") have cooperating locating elements (17, 18) so that the light guides (9), when inserted into the housing hood (1"), latch with the housing hood (1"); and
- in that the printed-circuit board (2) can be inserted into the housing hood (1") towards the display side (8) of the housing hood (1")
- so that the printed-circuit board (2) and the light guides (9) can be assembled independently of each other.

2. Electrical apparatus according to claim 1, characterised in that the light guides (9) can be inserted into the recesses (10) by means of a substantially linear movement.

3. Electrical apparatus according to claim 1 or 2, characterised in that the light guides (9) are bevelled on their insertion side (15).

4. Electrical apparatus according to one of the above claims, characterised in that the light-emitting diodes (7) do not radiate their light directly towards the display side (8) and in that the light is deflected towards the display side (8) by means of a directional surface (12), for example a reflector surface (12), which is integrated in the light guide (9).

5. Electrical apparatus according to claim 4, characterised in that the directional surface (12) is surrounded by a protective casing (13).

6. Electrical apparatus according to one of the above claims, characterised in that a plurality of light guides (9) are combined to form a one-piece light guide unit (14).

7. Electrical apparatus according to claim 6, characterised in that the locating elements (18) on the light guide side are arranged at the ends of the light guide unit (14).

## Revendications

1. Appareil électrique constitué
- d'un boîtier (1),
- qui est composé d'un corps de base de boîtier (1') et d'un capot de boîtier (1"),
- et d'au moins une plaque de circuit imprimé (2) disposée dans le boîtier (1),
- qui est maintenue dans le boîtier (1), notamment dans le capot de boîtier (1"), par des rails de guidage (11),
- sur laquelle sont disposées des diodes électroluminescentes (7) en retrait du boîtier (1), notamment des diodes électroluminescentes (7) du type SMD,
la lumière émise par les diodes électroluminescentes (7) pouvant être transmise par des guides optiques (9), en passant par des évidements (10) agencés dans le capot de boîtier (1"), vers l'extérieur sur une face de visualisation (8) de l'appareil électrique, **caractérisé**
- en ce que les guides optiques (9) peuvent être insérés dans les évidements (10) à partir d'une face de visualisation (8) du capot de boîtier (1"),
- en ce que les guides optiques (9) et le capot de boîtier (1") présentent des éléments d'encliquetage (17, 18) coopérant mutuellement, de sorte que les guides optiques (9), lors de l'insertion dans le capot de boîtier (1"), viennent s'encliqueter avec le capot de boîtier (1"), et
- en ce que la plaque de circuit imprimé (2) pour être insérée dans le capot de boîtier (1"), en direction de la face de visualisation (8) du capot de boîtier (1"),
- de sorte que la plaque de circuit imprimé (2) et les guides optiques (9) peuvent être montés indépendamment les uns des autres.

2. Appareil électrique selon la revendication 1, **caractérisé** en ce que les guides optiques (9) peuvent être insérés dans les évidements (10) au moyen d'un mouvement sensiblement linéaires.

3. Appareil électrique selon la revendication 1 ou 2, **caractérisé** en ce que les guides optiques (9) sont biseautés sur leur côté d'insertion (15).

4. Appareil électrique selon l'une des revendications précédentes, **caractérisé** en ce que les diodes électroluminescentes (7) ne rayonnent pas leur lumière directement vers la face de visualisation (8), et en ce que la lumière est déviée vers la face de visualisation (8) au moyen d'une surface directive (12) intégrée au guide optique (9), par exemple une surface réfléchissante (12).

5. Appareil électrique selon la revendication 4, **caractérisé** en ce que la surface directive (12) est entourée par une enveloppe de protection (13).

6. Appareil électrique selon l'une des revendications précédentes, **caractérisé** en ce que plusieurs guides optiques (9) sont regroupés en une unité de guide optique (14) d'une seule pièce.

7. Appareil électrique selon la revendication 6, **caractérisé** en ce que les éléments d'encliquetage (18) côté guide optique, sont disposés aux extrémités de l'unité de guide optique (14).
